# EUROPÄISCHE PATENTSCHRIFT

(11) **EP 1 793 150 B1**
(45) Veröffentlichungstag und Bekanntmachung des Hinweises auf die Patenterteilung: **10.02.2010**
(21) Anmeldenummer: 06024924.0
(22) Anmeldetag: 01.12.2006
(51) Int. Cl.: F16K 35/02, F16K 11/087, F16K 35/14

(54) **Absperrvorrichtung, insbesondere für Druckleitungen**
Shut-off device, in particular for pressure conduits
Dispositif d'arrêt, notamment pour conduites sous pression

(30) Priorität: 03.12.2005 DE 102005057818
(43) Veröffentlichungstag der Anmeldung: 06.06.2007
(73) Patentinhaber: WESTO Hydraulik GmbH, 50259 Pulheim (DE)
(72) Erfinder: Wesselow, Hans Dieter, 50259 Pulheim (DE)
(74) Vertreter: Maxton Langmaack & Partner

(56) Entgegenhaltungen:
- WO-A-92/13223
- DE-A1- 4 432 873
- DE-C- 898 701
- GB-A- 2 270 141
- GB-A- 2 413 619
- US-A- 2 678 186
- US-B1- 6 886 508

## Beschreibung

Die vorliegende Erfindung betrifft eine Absperrvorrichtung, insbesondere für Druckleitungen, mit einem Rohrgehäuseteil und einem Entlastungsgehäuseteil, sowie ein Verfahren zur Absperrung einer Druckleitung.

Rohrleitungen, insbesondere solche, welche unter Druck stehen oder innerhalb welcher ein Vakuum herrscht, müssen zu einer Revision oder aber einer Reparatur derselben sicher abgesperrt werden. Hierzu sind Absperrvorrichtungen bekannt, wobei diese als Schließvorrichtungen in aller Regel Kugelhähne, Klappen oder Schiebeelemente aufweisen.

So offenbart DE 202 09 477 U1 ein Absperrorgan mit einem herausnehmbaren Verschlussteil, wobei als Verschlussteil hier das Küken eines Kugelhahnes dient, welches im Falle eines Defektes Ober ein schließbares Ventilgehäuse entfernbar ist.

Bei Rohrleitungen bzw. Vorrichtungen, welche unter Druck stehen, bzw. in welchen ein Vakuum herrscht, besteht zusätzlich die Notwendigkeit, bei Absperrung einer solchen mittels einer Absperrvorrichtung eine Entlastung zur Ableitung des Über- bzw. Unterdruckes zur Verfügung zu stellen. Zudem muss im Hinblick auf die Arbeitsplatzsicherheit bei Durchführung von Revisionen oder Reparaturen an derartigen Rohrleitungen eine erhöhte Vorsicht walten gelassen werden, damit verhindert wird, dass z.B. eine aus Gründen der Revision geschlossene Rohrleitung versehentlich wieder geöffnet wird, und es hierdurch insbesondere zu Verletzungen des Bedienungspersonales kommt.

Weiterer relevanter Stand der Technik ist durch WO-A-92/13233 und durch DE-C-898701 gegeben.

Aufgabe der vorliegenden Erfindung ist es daher, eine Absperrvorrichtung der vorstehend genannten Art zur Verfügung zu stellen, welche die Arbeitsplatzsicherheit insbesondere bei Revision oder Reparaturen von unter Über- oder Unterdruck stehenden Rohrleitungen erhöht.

Diese Aufgabe wird erfindungsgemäß gelöst durch eine Absperrvorrichtung, insbesondere für Druckleitungen, mit einem Rohrgehäuseteil und einem Entlastungsgehäuseteil, welche über eine doppelt betätigbare Schließvorrichtung, umfassend ein Kupplungsstück, wechselseitig geöffnet und/oder geschlossen werden, wobei ein in einer Hülse (50) aufgenommenes Arretierungsmittel (42) in Form eines Druckschlosses mit Schlüssel (46) vorgesehen ist, wobei die Schließvorrichtung bei geschlossenem Rohrgehäuseteil (12) und geöffnetem Entlastungsgehäuseteil (14) durch das Druckschloss arretierbar ist, und bei Abschließung des Druckschlosses mittels des Schlüssels (46) dieser vom Druckschloss entfernbar ist. Arretierbar im Sinne der vorliegenden Erfindung bedeutet dabei, dass entweder nur unter Anwendung von Gewalt oder aber erhöhten Kräften eine Änderung der Stellung der Schließvorrichtung erfolgt. Dabei bezeichnet der Begriff "Stellung der Schließvorrichtung" jede mögliche Stellung derselben, einschließlich einer solchen, bei welcher das Rohrgehäuseteil teilweise geöffnet und das Entlastungsgehäuseteil teilweise geöffnet ist, bevorzugt ist die Schließvorrichtung jedoch in den jeweiligen Endstellungen arretierbar. Diese Endstellungen sind definiert durch einerseits eine vollständige Öffnung des Rohrgehäuseteiles bei einer gleichzeitigen vollständigen Schließung des Entlastungsgehäuseteiles, andererseits durch eine vollständige Öffnung des Entlastungsgehäuseteiles bei einer vollständigen Schließung des Rohrgehäuseteiles. Die Schließvorrichtung kann dabei in jeder möglichen aus dem Stand der Technik bekannten Art, insbesondere als Schieber, Klappe oder aber als Hahn, ausgebildet sein, bevorzugt ist diese jedoch als Doppelkugelhahn ausgebildet.

Die erfindungsgemäße Absperrvorrichtung weist den großen Vorteil auf, dass aufgrund der Arretierbarkeit der Schließvorrichtung in einer Stellung sichergestellt ist, dass insbesondere bei einer Revision oder Reparatur eines Teiles einer unter Druck stehenden Apparatur, deren Druck aufgrund der Entlastung über das Entlastungsgehäuseteil der Absperrvorrichtung auf Normaldruck abgesenkt wurde, die erfindungsgemäße Absperrvorrichtung nicht versehentlich geöffnet wird und es somit nicht zu Verletzungen insbesondere des Bedienungspersonales kommt.

Vorteilhafterweise ist die Schließvorrichtung über das Kupplungsstück arretierbar. Das Kupplungsstück stellt die wechselseitige Öffnung und/oder Schließung des Rohrgehäuseteiles bzw. des Entlastungsgehäuseteiles sicher. Ist die Schließvorrichtung als Doppelkugelhahn ausgebildet, so sind im Kupplungsstück zwei Schaltwellen, die gegen das Rohrgehäuseteil und das Entlastungsgehäuseteil abgedichtet sind, angeordnet, mittels welchen ein sich im Rohrgehäuseteil und im Entlastungsgehäuseteil jeweils angeordnetes Küken mit einer zylindrischen Bohrung bewegbar sind. Die Küken sind dabei insbesondere mittels Dichtringen gegenüber den jeweiligen Gehäuseteilen der Absperrvorrichtung abgedichtet. Vorteilhafterweise weist das Kupplungsstück ein Mittelteil mit mindestens einer Ausnehmung zur zumindest teilweisen Aufnahme eines Arretierungsmittels auf. Das Mittelteil weist hierzu bevorzugt eine Materialverdickung auf, und ist bevorzugt im Falle der Ausbildung der Schließvorrichtung als Doppelkugelhahn in etwa mittig im Verhältnis zu den beiden die Schaltwellen aufnehmenden Teilen des Kupplungsstückes angeordnet. Dabei kann die Materialverdickung in jeder möglichen Form ausgebildet sein, bevorzugt ist das Mittelteil als Zylinderscheibe ausgebildet. Aber auch jede andere Ausbildung insbesondere der Umfangskontur, beispielsweise eine quadratische oder dreieckige ist möglich. Im Mittelteil ist dabei die bevorzugt mindestens eine Ausnehmung derart angeordnet, dass diese beispielsweise in Form einer Bohrung, aber auch einer Nut ausgebildet sein kann, wobei die Bohrung und die Nut jede mögliche notwendige Form aufweisen können. Bevorzugt ist dabei eine Innenkontur der Ausnehmung, insbesondere der Bohrung und/oder Nut, dem Arretierungsmittel angeformt, so dass dieses sicher und allenfalls mit geringem Spiel in diesem aufgenommen ist, um eine sichere Arretierung der Schließvorrichtung zu erzielen. Das Arretierungsmittel kann dabei in Form eines Zylinderrohrstückes, aber auch in jeder anderen Form ausgebildet sein, es kann insbesondere auch Hinterschneidungen oder Ähnliches aufweisen, so dass bei einer entsprechenden Ausbildung der Ausnehmung mit Vorsprüngen, welche gegebenenfalls auch elastisch ausgebildet sein können, hier durch eine Hintergreifung dieser Vorsprünge durch die Hinterschneidungen des Arretierungsmittels eine noch weiter gesicherte Arretierung erzielt wird. Dabei können auch zusätzlich Quetschpassungen etc. vorgesehen werden, um hier die Arretierung sicherzustellen. Aber auch jede andere mögliche Außenkontur des Arretierungsmittels, beispielsweise eine sechskantige oder dreieckige Außenkontur oder aber eine rechteckige bzw. quadratische Außenkontur ist möglich.

In einer weiter bevorzugten Ausführungsform ist am Kupplungsstück ein Bedienungsmittel angeordnet. Über dieses Bedienungsmittel ist die Schließvorrichtung betätigbar. Das Bedienungsmittel ist dabei vorzugsweise als Griff ausgebildet, wobei dieser Griff beispielsweise in Form einer einfachen Stange ausgebildet sein kann. Das Bedienungsmittel kann jedoch auch ein elektrisch, pneumatisch oder hydraulisch betriebenes sein, wobei hier über eine Steuer- und Regelungseinheit eine Betätigung desselben ermöglicht ist, ebenso wie eine solche des Arretierungsmittels. Das Kupplungsstück ist dabei bevorzugt über einen Winkel in einem Bereich von etwa 0 Grad bis etwa 180 Grad bewegbar. Dabei entspricht die 0 Grad-Stellung bevorzugt derjenigen Stellung, bei welcher das Rohrgehäuseteil geöffnet ist. Umgekehrt kann jedoch bei dieser Stellung auch das Entlastungsgehäuseteil geöffnet sein. Damit markiert die 0 Grad-Stellung eine der möglichen Endstellungen der Schließvorrichtung. Die weitere Endstellung kann in dem angegebenen Winkelbereich an jeder möglichen Position liegen, bevorzugt liegt diese jedoch bei entweder etwa 90 Grad bzw. etwa 180 Grad. In dieser Stellung ist das Rohrgehäuseteil bevorzugt vollständig geschlossen und das Entlastungsgehäuseteil geöffnet, es kann jedoch auch umgekehrt das Rohrgehäuseteil vollständig geöffnet und das Entlastungsgehäuseteil vollständig geschlossen sein.

In einer besonders bevorzugten Ausführungsform der vorliegenden Erfindung ist die Absperrvorrichtung abschließbar ausgebildet. Durch die Abschließbarkeit ist eine versehentliche Lösung der Arretierung der Schließvorrichtung sicher vermieden, allenfalls eine unter Anwendung von Gewalt mögliche Lösung wäre möglich. Dass bei Abschließung des Arretierungsmittels mittels eines Schlüssels dieser entfernbar ist, weist den großen Vorteil auf, dass insbesondere bei einer Stellung der Schließvorrichtung in einer Ihrer Endstellungen der Schlüssel entfernt werden kann, so dass eine versehentliche Lösung der Arretierung durch Drehen des Schlüssels weiterhin verhindert ist. Die erfindungsgemäße Absperrvorrichtung ist bei geschlossenem Rohrgehäuseteil und geöffnetem Entlastungsgehäuseteil arretierbar. Weiterhin ist bei geschlossenem Rohrgehäuseteil und geöffnetem Entlastungsgehäuseteil der Schlüssel des Arretierungsmittels entfernbar. In diesem Zustand ist beispielsweise ein der Reparatur oder der Revision zu unterziehender Teil einer unter Druck stehenden Anlage in einem teilweise auf Normaldruck abgesenktem Bereich eingestellt worden, so dass dort die Durchführung der Revision bzw. Reparatur ermöglicht ist. Die Absenkung auf Normaldruck erfolgt dabei über eine Entlastungsleitung, welche über das Erlastungsgehäuseteil der erfindungsgemäßen Absperrvorrichtung geführt ist. Dabei steht bevorzugt das Entlastungsgehäuseteil der erfindungsgemäßen Absperrvorrichtung über eine Zuleitung mit dem einer Revision zu unterziehenden Bereich in Verbindung, insbesondere über ein in einer Rohrleitung, insbesondere angeflanschtes, Kupplungsstück. Durch die vorstehenden Maßnahmen ist es vorteilhafterweise sichergestellt, dass bei gesperrtem Rohrgehäuseteil und geöffnetem Entlastungsgehäuseteil nicht versehentlich durch einen Dritten eine Betätigung der Schließvorrichtung erfolgt. Allenfalls unter Gewaltanwendung, insbesondere bei Einwirkung von Gewalt auf das Arretierungsmittel, wäre hier eine Lösung der Arretierung ermöglicht. Das Arretierungsmittel ist als Druckschloss ausgebildet. Es ist weiter bevorzugt zur Erhöhung der Sicherheit in einer Hülse aufgenommen, wobei es bevorzugt in die Hülse eingepreßt ist, insbesondere bei einer Ausbildung als Druckschloß. Die Hülse ist dabei bevorzugt über mindestens einen Schweißpunkt gesichert, wobei der Schweißpunkt bevorzugt eine Verbindung zwischen Hülse und Kupplungsstück und/oder einem zusätzlich vorhandenen Verbindungsstück, welches Rohrgehäuseteil und Entlastungsgehäuseteil verbindet, sicherstellt. Das Arretierungsmittel kann aber auch durch eine Steuer- und Regelungseinheit, vorzugsweise durch diejenige zur Steuerung des Bedienungsmittels, betätigt werden, insbesondere auch bei Fernwartungen oder Ähnlichem.

In einer weiter vorteilhaften Ausführungsform der vorliegenden Erfindung ist das Rohrgehäuseteil und das Entlastungsgehäuseteil miteinander durch ein Verbindungsstück verbunden. Das Verbindungsstück ist dabei bevorzugt flanschartig ausgebildet, und weist eine obere und eine untere Wand auf, welche einem Gehäuseteilbereich des Rohrgehäuseteiles und des Entlastungsgehäuseteiles zugewandt ist. Hier kann eine sichere Verbindung durch jegliche Art von Befestigungsmitteln erfolgen, insbesondere Schrauben, welche bevorzugt als Inbus- oder Sechskantschrauben ausgebildet sein können. Die beiden das Entlastungsgehäuseteil und das Rohrgehäuseteil tragenden Wände des Verbindungsstückes sind untereinander derart verbunden, dass hier eine ausreichende Festigkeit der gesamten Absperrvorrichtung gegeben ist. Dabei kann das Verbindungsstück insbesondere als geschlossenes Gehäuse ausgebildet sein, welches zur Ermöglichung der Betätigung der Schließvorrichtung mit einer Ausnehmung, insbesondere in Form einer Bohrung, insbesondere einer Langbohrung, versehen sein kann. Das Verbindungsstück kann aber beispielsweise auch als viereckiges Rohrstück ausgebildet sein, so dass die beiden dem Rohrgehäuseteil und dem Entlastungsgehäuseteil zugewandten Wände lediglich über zwei seitliche Wände miteinander fest verbunden sind. Dabei kann eine der Seitenwände des Verbindungsstückes eine Ausnehmung, bevorzugt als Langbohrung zur Betätigung der Schließvorrichtung über das Bedienungsmittel, aufweisen. Ist das Bedienungsmittel beispielsweise als ein manuell betätigbarer Bedienungsgriff in Form einer zylinderförmigen Stange ausgebildet, so weist die mindestens eine Seitenwand des Verbindungsstückes eine von Ihrer offenen Seite ausgehende Langbohrung auf, so dass das Bedienungsmittel in einer Endstellung in diese aufgenommen wird. Bei Führung des Bedienungsmittels aus der Langbohrung heraus wird dieses dann über den wandlosen Bereich des Verbindungsstückes bis zu einer Endstellung geführt. Befindet sich die Endstellung in einer 90 Grad-Stellung, ist in der der ersten Seitenwand gegenüberliegenden zweiten Seitenwand keine weitere Ausnehmung zur Aufnahme des Bedienungsmittels notwendig, befindet sich die Endstellung in einer 180 Grad-Position, so weist die der ersten Seitenwand gegenüberliegende zweite Seitenwand bevorzugt eine entsprechende spiegelbildlich angeordnete Außenerhebung, insbesondere als Langbohrung ausgebildet, zur Aufnahme des Bedienungsmittels auf.

Vorzugsweise ist das Kupplungsstück der Schließvorrichtung im Wesentlichen innerhalb des Verbindungsstückes angeordnet. Hierdurch ist das Kupplungsstück mitsamt den in diesem aufgenommenen Wellen gegen Fremdeinwirkungen von außen sicher geschützt, des Weiteren kann die erfindungsgemäße Absperrvorrichtung ausgesprochen kompakt ausgebildet werden.

Vorteilhafterweise ist das Arretierungsmittel am Verbindungsstück angeordnet. Hierdurch wird eine Entkopplung der Arretierungsfunktion mit der Schließfunktion der erfindungsgemäßen Absperrvorrichtung erzielt, das Arretierungsmittel befindet sich dabei bevorzugt in einer unbewegten, festen Position angeordnet am Verbindungsstück, beispielsweise mittig in einer der bis zu vier Seitenwände desselben angeordnet. Es kann dabei auch vorgesehen sein, zur Erhöhung der Sicherheit und Verringerung insbesondere eines möglichen Spieles in den insbesondere Endstellungen der Schleißvorrichtung zwei Arretierungsmittel vorzusehen, wobei diese auch an verschiedenen Seitenwänden des Verbindungsstückes angeordnet sein können.

Des Weiteren betrifft die vorliegende Erfindung ein Verfahren zur Absperrung einer Druckleitung, wobei
- mittels einer Schließvorrichtung eine Rohrleitung gesperrt und eine Entlastungsleitung geöffnet werden;
- Ober die Entlastungsleitung Druck von dem abgesperrten Teil der Druckleitung abgeleitet wird;
- die Schließvorrichtung mittels eines Arretierungsmittels (42) in Form eines Druckschlosses mit Schlüssel (46) arretiert wird; und
- der Schlüssel (46) aus dem Druckschloss entfernt wird, um eine Veränderung der Position des Arretierungsmittels zu verhindern.

Dabei wird bevorzugt die Öffnung bzw. Schließung durch Betätigung eines Bedienungsmittels der Schließvorrichtung vorgenommen, wobei weiter bevorzugt das Bedienungsmittel über einen Bereich von etwa 0 Grad bis etwa 180 Grad bewegt wird.

Mittels des erfindungsgemäßen Verfahrens ist im Falle einer Revision oder Reparatur einer unter Druck stehenden Apparatur, insbesondere einer hydraulisch arbeitenden Vorrichtung, eine sichere Revision und Reparatur derselben ermöglicht. Diese und weitere Vorteile der vorliegenden Erfindung werden anhand der folgenden Figuren näher erläutert. Es zeigen:
- Fig. 1:: eine Schnittansicht einer erfindungsgemäßen Absperrvorrichtung mit einem geöffneten Rohrgehäuseteil und einem geschlossenen Entlastungsgehäuseteil;
- Fig. 2:: eine Draufsicht auf die Vorrichtung gemäß Fig. 1;
- Fig. 3:: eine Schnittansicht durch die Absperrvorrichtung gemäß Fig. 1 in einer Betriebsstellung mit geschlossenem Rohrgehäuseteil und geöffnetem Entlastungsgehäuseteil; sowie
- Fig. 4:: eine Draufsicht auf die Absperrvorrichtung in der Betriebsstellung gemäß Fig. 3.

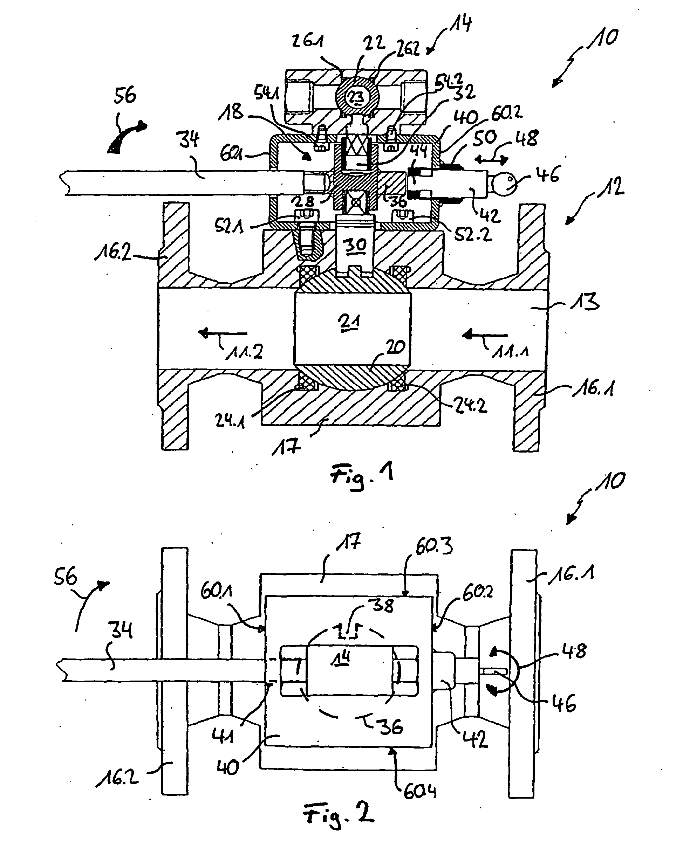

Fig. 1 zeigt eine insgesamt mit dem Bezugszeichen 10 bezeichnete erfindungsgemäße Absperrvorrichtung mit einem Rohrgehäuseteil 12 und einem Entlastungsgehäuseteil 14. Das Rohrgehäuseteil 12 weist dabei einen am Einlass angeordneten Flansch 16.1 und einen am Ausgang angeordneten Flansch 16.2 auf, welche über eine Langbohrung 13, durch welche insbesondere fluide Medien wie Hydrauliköle, Luft oder Gase in Richtung der Pfeile 11.1 bzw. 11.2 oder umgekehrt strömen, verbunden ist. Zwischen den Flanschen 16.1 und 16.2 weist das Rohrgehäuseteil 12 einen als Ventilgehäuse 17 zu bezeichnendes Mittelteil auf. In diesem Mittelteil 17 ist ein Küken 20 mit einer zylindrischen Bohrung, als Durchgang 21 ausgebildet, aufgenommen, wobei dieses über Dichtringe 24.1 und 24.2 dichtend gegen das Rohrgehäuseteil 12 ausgebildet ist. In einer Bohrung des Rohrgehäuseteils 12, zugewandt einer Schließvorrichtung 18, ist zur Betätigung des Kükens 20 eine erste Schaltwelle 30 aufgenommen. Diese kann dabei dichtend durch beispielsweise eine Stopfbuchse oder Ähnliches in der entsprechenden Bohrung im Mittelteil 17 des Rohrgehäuseteiles 12 aufgenommen sein.

Das Entlastungsgehäuseteil 14 weist ebenfalls ein Küken 22 mit einer zylindrischen Bohrung 23 auf, wobei dieses über Dichtringe 26.1 und 26.2 gegenüber dem Gehäuse 14 dichtend angeordnet ist. Über eine Schaltwelle 32, welche teilweise in einer Bohrung in dem der Schließvorrichtung 18 zugewandten Teil des Gehäuseteiles 14 angeordnet ist, ist das Küken 22 betätigbar.

Die Schließvorrichtung 18 umfasst ein zentrales Kupplungsstück 28, welches einen Mittelteil 36, ausgebildet als Zylinderscheibe, aufweist, wobei an der Umfangsfläche desselben ein als Stab ausgebildetes Bedienungsmittel 34 zur Betätigung der Schließvorrichtung 18 vorgesehen ist. Das Kupplungsstück 28 weist weiterhin Aufnahmen für die Schaltwellen 30 und 32 auf. Die Schließvorrichtung 18 umfasst somit im Wesentlichen das mittels des Betätigungsmittels 34 betätigbare Kupplungsstück 28 sowie die Schaltwellen 30 und 32 einschließlich der durch diese betätigbaren Küken 20 und 22.

Das Rohrgehäuseteil 12 und das Entlastungsgehäuseteil 14 sind dabei über ein Verbindungsstück 40 miteinander verbunden. Dabei ist das Rohrgehäuseteil 12 mittels als Inbusschrauben ausgebildeten Befestigungsmitteln 52.1 und 52.2 fest mit dem Verbindungsstück 40 verbunden, wobei auch mehr als zwei Befestigungsmittel 52.1 und 52.2 vorgesehen sein können. Diese greifen in entsprechende Bohrungen oder Ausnehmungen im Mittelteil 17 des Rohrgehäuseteils 12 ein. Umgekehrt weist die dem Entlastungsgehäuseteil 14 zugewandte Wand des Verbindungsstückes 40 mindestens zwei Bohrungen zur Aufnahme von Befestigungsmitteln 54.1 und 54.2 auf, welche ebenfalls als Inbusschrauben ausgebildet sind. Auch hier können mehr als zwei Befestigungsmittel 54.1 und 54.2 vorgesehen sein. Diese greifen in Bohrungen bzw. Ausnehmungen auf der der entsprechenden Wand des Verbindungsstückes 40 zugewandten Seite des Entlastungsgehäuseteiles 14 ein.

Die Schließvorrichtung 18 kommt nun im Wesentlichen mit ihrem gesamten Kupplungsstück 28 samt Mittelteil 36 im Inneren des Verbindungsteiles 40 zu liegen, ebenso Teile der Schaltwellen 30 und 32. Hierdurch sind die, insbesondere bei einer nicht geschlossenen Ausführung des Verbindungsstückes 40, beispielsweise bei Ausbildung desselben als Vierkantrohrstück, beweglichen Teile der Schließvorrichtung 18 vor schädigenden Einflüssen von außen geschützt.

Das Verbindungsstück 40 ist in Fig. 1 als Vierkantrohrstück ausgebildet, und weist in einer Seitenwand 60.1 eine Langbohrung auf, durch welche in einer Endstellung das Bedienungsmittel 34 aufgenommen ist. Die Endstellung ist dabei dadurch charakterisiert, dass der Durchgang 21 des Kükens 20 fluchtend mit der Langbohrung 13 im Rohrgehäuseteil 12 zu liegen kommt, d.h. der Rohrgehäuseteil 12 geöffnet ist. Umgekehrt ist der Entlastungsgehäuseteil 14 der Absperrvorrichtung 10 durch das Küken 22 geschlossen. Zur Öffnung aus dieser Stellung, welche einer 0 Grad-Position entspricht, wird das Bedienungsmittel 34 in Richtung eines Pfeils 56 bewegt.

Des Weiteren weist das Verbindungsstück 40 an seiner Seitenwand 60.2 in etwa mittig angeordnet ein Arretierungsmittel 42 auf, welches an seinem einen Ende ein Zylinderstück 44 zur Eingreifung in einer in der Fig. 1 nicht gezeigten Ausnehmung im Mittelteil 36 des Kupplungsstückes 28 aufweist. Das Arretierungsmittel 42 ist dabei als Druckschloss mit einem Schlüssel 46 ausgebildet, wobei dieser in Richtung des Pfeils 48 bewegbar ist. Die Absperrvorrichtung 10 gemäß Fig. 1 ist dabei in einem nicht arretierten Zustand in der 0 Grad-Position bei geöffnetem Rohrgehäuseteil 12 und geschlossenem Entlastungsgehäuseteil 14 gezeigt.

Fig. 2 zeigt eine Draufsicht auf die Absperrvorrichtung 10 gemäß Fig. 1 in der 0 Grad-Stellung und nicht arretiert. Dabei ist zur Verdeutlichung der Ausbildung des Mittelteiles 36 dieses durch eine gestrichelte Linie angedeutet wiedergegeben, wobei hier gleichzeitig eine Ausnehmung 38 vorgesehen ist, welche das Zylinderstück 44 des Arretierungsmittels 42 aufnehmen kann. Die Ausnehmung 38 des Mittelteils 36 des Kupplungsstücks 28 ist dabei in einem Winkel von etwa 90 Grad zu dem Ansatz des Bedienungsmittels 34 am Mittelteil 30 angeordnet. Des Weiteren ist Fig. 2 zu entnehmen, dass im Verbindungsstück 40 ein Anschlag 41 für das Bedienungsmittel 34 vorgesehen ist, beispielsweise das Ende einer Langbohrung in der Seitenwand 60.1.

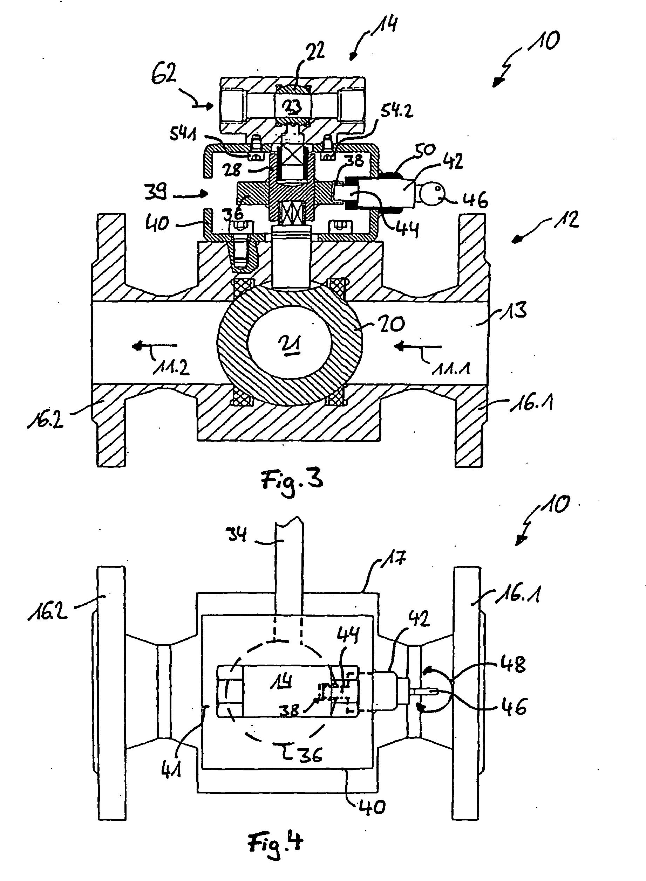

Der Schlüssel 46 ist in Richtung der Pfeile 48 drehbar, ist gleichwohl jedoch nur im arretierten Zustand, welcher im Weiteren in den Fig. 3 und 4 erläutert werden wird, von dem Arretierungsmittel 42 abziehbar.

Fig. 3 zeigt nun die Absperrvorrichtung 10 gemäß Fig.1 in einer zweiten Betriebsstellung, wobei hierbei nun die Langbohrung 13 des Rohrgehäuseteiles 12 durch das Küken 20 gesperrt ist, wohingegen das Entlastungsgehäuseteil 14 ein geöffnetes Küken 23 mit einem Durchgang 23 aufweist, so dass hier aus dem abgesperrten Teil der Gesamtvorrichtung, in welcher die Absperrvorrichtung 10 angeordnet ist, eine Druckentlastung aus Richtung des Pfeils 62 durch das Entlastungsgehäuseteil 14 erfolgt. Wie Fig. 3 gut zu entnehmen ist, ist nunmehr das Zylinderstück 44 des Arretierungsmittels 42 in der Aufnahme 38 des Mittelteiles 36 des Kupplungsstücks 28 aufgenommen. Dabei ist das Arretierungsmittel 42 in Richtung des Pfeils 48 gemäß Fig. 1 auf das Verbindungsstück 40 zu bewegt worden. Das Arretierungsmittel 42 ist dabei in einer Hülse 50 aufgenommen, wobei das Gehäuse des Arretierungsmittels 42, welches bevorzugt als Druckschloss ausgebildet ist, mittels mindestens einem Schweißpunkt in der Hülse 50 aufgenommen ist, um hier eine sichere Verbindung desselben mit dem Verbindungsstück 40 sicherzustellen. Der Schlüssel 46 kann in dieser Betriebsstellung abgezogen werden, so dass auch ein versehentliches Öffnen der Absperrvorrichtung 10 sicher vermieden ist.

Fig. 4 verdeutlicht in einer Draufsicht insbesondere die Stellung des Bedienungsmittels 34, welches nunmehr in einem Winkel von etwa 90 Grad im Verhältnis zur Ausgangstellung (0 Grad-Position) gemäß den Fig. 1 und 2 angeordnet ist. Hierdurch kommt die Ausnehmung 38 gegenüberliegend dem Zylinderstück 44 des Arretierungsmittels 42 zu liegen, so dass dieses über den Druckmechanismus des als Druckschloss ausgebildeten Arretierungsmittels 42 in der Ausnehmung 38 bevorzugt form- und passgenau aufgenommen wird.

Zur Lösung der Arretierung gemäß Fig. 3 und 4 wird der Schlüssel 46 wieder in das Arretierungsmittel 42 eingebracht, durch Drehung und Bewegung des Arretierungsmittels 42 in Richtung des Pfeils 48 gemäß Fig. 1 vom Verbindungsstück 40 weg das Zylinderstück 44 aus der Ausnehmung 38 hinausgeführt, so dass hierdurch wieder eine freie Bewegung des Kupplungsstückes 28 und damit der Schließvorrichtung 18 über das Bedienungsmittel 34 ermöglicht ist, und selbiges aus der 90 Grad-Position wiederum in die 0 Grad-Position zur Wiederaufnahme des Betriebes der Gesamtvorrichtung überführbar ist.

Durch die vorliegende Erfindung ist somit eine Absperrvorrichtung zur Verfügung gestellt, mittels welcher Revisionen und Reparaturen an unter Druck stehenden Gesamtvorrichtungen, insbesondere hydraulisch oder pneumatisch betriebenen, sicher durchgeführt werden können. Dabei kann selbstverständlich auch selbiges vorgesehen sein bei Vorrichtungen, welche mit Unterdruck arbeiten, nur dass dann hier die Strömungen gemäß den Pfeilen 11.1, 11.2 und 62 umgekehrt verlaufen würden.

## Patentansprüche

1. Absperrvorrichtung (10), insbesondere für Druckleitungen, mit einem Rohrgehäuseteil (12) und einem Entlastungsgehäuseteil (14), welche über eine doppelt betätigbare Schließvorrichtung (18), umfassend ein Kupplungsstück (28), wechselseitig geöffnet und/oder geschlossen werden, **dadurch gekennzeichnet, dass** ein in einer Hülse (50) aufgenommenes Arretierungsmittels (42) in Form eines Druckschlosses mit Schlüssel (46) vorgesehen ist, wobei die Schließvorrichtung bei geschlossenem Rohrgehäuseteil (12) und geöffnetem Entlastungsgehäuseteil (14) durch das Druckschloss arretierbar ist, und bei Abschließung des Druckschlosses mittels des Schlüssels (46) dieser vom Druckschloss entfernbar ist.

2. Absperrvorrichtung gemäß Anspruch 1, **dadurch gekennzeichnet, dass** die Schließvorrichtung (18) über das Kupplungsstück (28) arretierbar ist.

3. Absperrvorrichtung gemäß einem der vorhergehenden Ansprüche, **dadurch gekennzeichnet, dass** das Kupplungsstück (28) ein Mittelteil (36) mit mindestens einer Ausnehmung (38) zur zumindest teilweisen Aufnahme eines Arretierungsmittels (42) aufweist.

4. Absperrvorrichtung gemäß einem der vorhergehenden Ansprüche, **dadurch gekennzeichnet, dass** am Kupplungsstück (28) ein Bedienungsmittel (34) angeordnet ist.

5. Absperrvorrichtung gemäß einem der vorhergehenden Ansprüche, **dadurch gekennzeichnet, dass** das Kupplungsstück (28) über einen Winkel in einem Bereich von etwa 0 Grad bis etwa 180 Grad bewegbar ist

6. Absperrvorrichtung gemäß einem der vorhergehenden Ansprüche, **dadurch gekennzeichnet, dass** die doppelt betätigbare Schließvorrichtung (18) als Doppelkugelhahn ausgebildet ist.

7. Absperrvorrichtung gemäß einem der vorhergehenden Ansprüche, **dadurch gekennzeichnet, dass** das Rohrgehäuseteil (12) und das Entlastungsgehäuseteil (14) miteinander durch ein Verbindungsstück (40) verbunden sind.

8. Absperrvorrichtung gemäß einem der vorhergehenden Ansprüche, **dadurch gekennzeichnet, dass** das Kupplungsstück (28) der Schließvorrichtung (18) im Wesentlichen innerhalb des Verbindungsstückes (40) angeordnet ist.

9. Absperrvorrichtung gemäß einem der vorhergehenden Ansprüche, **dadurch gekennzeichnet, dass** das Arretierungsmittel (42) am Verbindungsstück (40) angeordnet ist.

10. Verfahren zur Absperrung einer Druckleitung, wobei
- mittels einer Schließvorrichtung (18) eine Rohrleitung gesperrt und eine Entlastungsleitung geöffnet werden;
- über die Entlastungsleitung Druck von dem abgesperrten Teil der Rohrleitung abgeleitet wird; und
- die Schließvorrichtung mittels eines Arretisrungsmittels (42) in Form eines Druckschlosses mit Schlüssel (46) arretiert wird; und
- der Schlüssel (46) aus dem Druckschloss entfernt wird, um eine Veränderung der Position des Arretierungsmittels zu verhindern.

11. Verfahren gemäß Anspruch 10, **dadurch gekennzeichnet, dass** die Öffnung bzw. Schließung durch Betätigung eines Bedienungsmittels (34) der Schließvorrichtung (18) vorgenommen wird.

12. Verfahren gemäß einem der Ansprüche 10 oder 11, **dadurch gekennzeichnet, dass** das Bedienungsmittel (34) über einen Bereich von etwa 0 Grad bis etwa 180 Grad bewegt wird.

## Claims

1. A shut-off apparatus (10), in particular for pressure lines, with a tube-housing part (12) and a release-housing part (14), which are opened and/or closed alternately by way of a doubly actuable closure apparatus (18) comprising a coupling member (28), **characterized in that** a locking means (42) in the form of a push lock with a key (46) received in a sleeve (50) is provided, wherein the closure apparatus is capable of being locked by the push lock when the tube-housing part (12) is closed and the release-housing part (14) is opened, and when the push lock is closed by means of the key (46) the latter is capable of being removed from the push lock.

2. A shut-off apparatus according to Claim 1, **characterized in that** the closure apparatus (18) is capable of being locked by way of the coupling member (28).

3. A shut-off apparatus according to one of the preceding Claims, **characterized in that** the coupling member (28) has a middle part (36) with at least one recess (38) for receiving a locking means (42) at least in part.

4. A shut-off apparatus according to any one of the preceding Claims, **characterized in that** an operating means (34) is arranged on the coupling member (28).

5. A shut-off apparatus according to any one of the preceding Claims, **characterized in that** the coupling member (28) is capable of being moved over an angle in a range of approximately 0° to approximately -180°.

6. A shut-off apparatus according to any one of the preceding Claims, **characterized in that** the closure apparatus (18) capable of being actuated in a double manner is constructed in the form of a double-ball-type valve.

7. A shut-off apparatus according to any one of the preceding Claims, **characterized in that** the tube-housing part (12) and the release-housing part (14) are connected to each other by a connecting member (40).

8. A shut-off apparatus according to any one of the preceding Claims, **characterized in that** the coupling member (28) of the closure apparatus (18) is arranged substantially inside the connecting member (40).

9. A shut-off apparatus according to any one of the preceding Claims, **characterized in that** the locking means (42) is arranged on the connecting member (40).

10. A method of shutting off a pressure line, wherein
- a release line is opened and a tube line is locked by means of a closure apparatus (18);
- pressure is transmitted from the shut-off part of the tube line by way of the release line, and
- the closure apparatus is locked by means of a locking means (42) in the form of a push lock with a key (46), and
- the key (46) is removed from the push lock in order to prevent a change in the position of the locking means.

11. A method according to Claim 10, **characterized in that** the opening or closure is carried out by actuation of an operating means (34) of the closure apparatus (18).

12. A method according to one of Claims 10 or 11, **characterized in that** the operating means (34) is moved over a range of approximately 0° to approximately 180°.

## Revendications

1. Dispositif d'obturation (10), notamment pour conduites sous pression, avec une partie de boîtier de tube (12) et une partie de boîtier de décharge (14) qui peut être alternativement ouvert ou fermé au moyen d'un dispositif de fermeture (18) pouvant être actionné dans deux sens, comprenant une pièce de raccordement (28), **caractérisé en ce qu'**il est prévu un moyen d'arrêt (42) monté dans une douille (50) sous forme de verrou à pression avec une clé (46), le dispositif de fermeture pouvant être bloqué par le verrou à pression lorsque la partie de boîtier de tube (12) est fermée et la partie de boîtier de décharge (14) est ouverte et que lorsque le verrou à pression est fermé au moyen de la clé (46), celle-ci peut être retirée.

2. Dispositif d'obturation selon la revendication 1, **caractérisé en ce que** le dispositif de fermeture (18) peut être bloqué au moyen de la pièce de raccordement (28).

3. Dispositif d'obturation selon l'une des revendications précédentes, **caractérisé en ce que** la pièce de raccordement (28) présente une partie intermédiaire avec au moins un évidemment (38) pour recevoir au moins en partie un moyen d'arrêt (42).

4. Dispositif d'obturation selon l'une des revendications précédentes, **caractérisé en ce qu'**un organe de manipulation (34) est disposé sur la pièce de raccordement (28).

5. Dispositif d'obturation selon l'une des revendications précédentes, **caractérisé en ce que** la pièce de raccordement (28) peut tourner dans une plage de 0° à 180°.

6. Dispositif d'obturation selon l'une des revendications précédentes, **caractérisé en ce que** le dispositif de fermeture pouvant être actionné dans deux sens (18) est constitué par un robinet à sphère double.

7. Dispositif d'obturation selon l'une des revendications précédentes, **caractérisé en ce que** la partie de boîtier de tube (12) et la partie de boîtier de décharge (14) sont reliées ensembles par une pièce de liaison (40).

8. Dispositif d'obturation selon l'une des revendications précédentes, **caractérisé en ce que** la pièce de raccordement (28) et le dispositif de fermeture (18) sont disposés essentiellement à l'intérieur de la pièce de liaison (40).

9. Dispositif d'obturation selon l'une des revendications précédentes, **caractérisé en ce que** le moyen d'arrêt (42) est disposé sur la pièce de liaison (40).

10. Procédé de fermeture d'une conduite sous pression, dans lequel
- au moyen d'un dispositif de fermeture (18) une conduite tubulaire peut être obturée et une conduite de décharge peut être ouverte ;
- la pression de la partie obturée de la conduite tubulaire peut être dérivée par la conduite de décharge ;
- le dispositif de fermeture est verrouillé grâce à un moyen d'arrêt (42) réalisé sous forme de verrou à pression avec une clé (46) et
- la clé (46) est retirée du verrou à pression afin d'empêcher une modification de la position du moyen d'arrêt.

11. Procédé selon la revendication 10, **caractérisé en ce que** l'ouverture ou la fermeture s'effectuent en actionnant un moyen de manipulation (34) du dispositif de fermeture (18).

12. Procédé selon la revendication 10 ou 11, **caractérisé en ce que** l'organe de manipulation (34) peut tourner dans une plage de 0° à 180°.
